# EUROPEAN PATENT SPECIFICATION

(11) **EP 3 270 550 B1**
(45) Date of publication and mention of the grant of the patent: **07.07.2021**
(21) Application number: 16764173.7
(22) Date of filing: 02.03.2016
(51) Int. Cl.: H04L 12/58

(54) **METHOD AND CORRESPONDING DEVICE FOR STARTING SERVICE THROUGH VOICE IN COMMUNICATION SOFTWARE**
VERFAHREN UND ZUGEHÖRIGE VORRICHTUNG ZUM STARTEN EINES DIENSTES DURCH SPRACHE IN KOMMUNIKATIONSSOFTWARE
PROCÉDÉ ET DISPOSITIF CORRESPONDANT POUR DÉMARRER UN SERVICE PAR L'INTERMÉDIAIRE D'UNE VOIX DANS UN LOGICIEL DE COMMUNICATION

(30) Priority: 13.03.2015 CN 201510111878
(43) Date of publication of application: 17.01.2018
(73) Proprietor: Advanced New Technologies Co., Ltd., George Town, Grand Cayman KY1-9008 (KY)
(72) Inventor: ZHOU, Jingwen, Hangzhou 310099 (CN); ZHU, Qin, Hangzhou 310099 (CN)
(74) Representative: Fish & Richardson P.C.
(86) International application number: PCT/CN2016/075377
(87) International publication number: WO 2016/145992

(56) References cited:
- WO-A1-00/62881
- WO-A1-2014/139117
- WO-A1-2014/173286
- CN-A- 1 347 332
- CN-A- 1 797 452
- CN-A- 1 905 598

## Description

### Technical Field

The present application relates to the field of communication technologies, and in particular, to a method for activating a business by voice in communication software and a corresponding apparatus.

### Background Art

With automatic financial payment technologies becoming increasingly mature, various types of financial payment forms have been gradually promoted and applied by people in daily life. For example, mobile banking technologies, e-banks, and the like have involved every field of people's daily life such as transportation, tax, finance, and security. The payment technologies of automatic payment and automatic transfer implemented by communication network systems provide great convenience for people's daily life.

Meanwhile, the current instant messaging technology provides a quick and efficient communication platform for people, such that online users can implement quick and instant information interaction via the Internet, and can also implement payment processing of various financial charges by using the Internet in instant messaging software. Therefore, the users can implement online financial payment conveniently and quickly.

In some existing instant messaging software, a user (payee) may initiate collection of money to an opposite side (payer) by establishing a collection order. However, the payee has to exit from a chat interface with the payer, click a button for selecting a collection function, and then perform a series of operations and clicks according to an operation process to implement the collection action. Therefore, the operation is complex.

WO 2014/173286 A1 discloses a method and a system allowing a user to start a chat window with a selected transaction target account. The user inputs voice signals, which are analysed in order to determine an operation type corresponding to the voice signals, so that the requested operation can be performed.

### Summary of the Invention

An objective of the present application is to provide a method for activating a business by voice in communication software and a corresponding apparatus, for solving the problem of complex operations of calling a business function module in chat software in the prior art, such that a user can have improved user experience when using a business function. The invention is defined by the appended claims.

It can be seen from the technical solution provided in the embodiments of the present application that, by adding a solution of activating a business by voice in communication software on a user terminal, a business can be initiated during chatting of the user. The user can use a business function without exiting from a chat interface to perform complex click operations, thus greatly simplifying the operation complexity of the user, such that the user can have better user experience.

Definitely, any product or method implementing the present application does not necessarily achieve all the above advantages at the same time.

### Brief Description of the Drawings

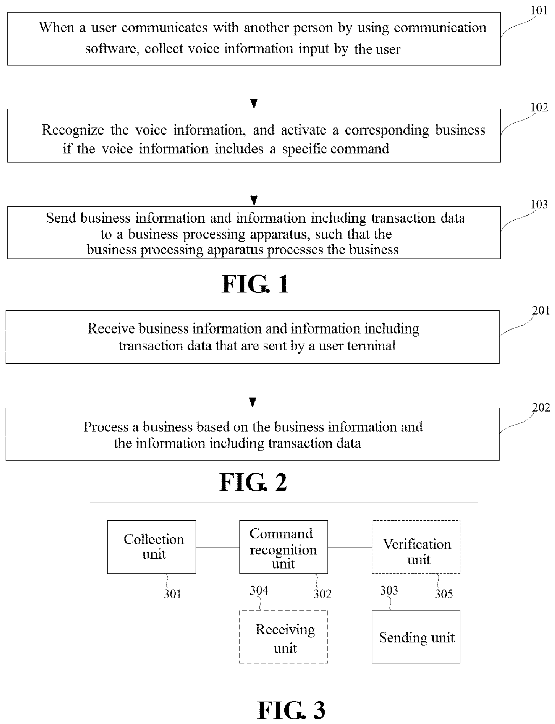

To describe the technical solutions in the embodiments of the present application or the prior art more clearly, the accompanying drawings to be used in the descriptions of the embodiments or the prior art are briefly introduced in the following. The examples depicted in figure 1 and figure 2 do not fall under the scope of the invention, however they are useful to understand it.
FIG. 1 is a flowchart of an example method for activating a business by voice in communication software;
FIG. 2 is a flowchart of an example method for activating a business by voice in communication software;
FIG. 3 is a schematic structural diagram of an apparatus for activating a business by voice in communication software according to the present application;
FIG. 4 is a schematic structural diagram of a business processing apparatus according to an embodiment of the present application;
FIG 5 is a data flow diagram of activating a business by voice in communication software according to an embodiment of the present application; and
FIG. 6 is another data flow diagram of activating a business by voice in communication software according to an embodiment of the present application.

### Detailed Description

The embodiments of the present application provide a method for activating a business by voice in communication software and a corresponding apparatus.

To make those skilled in the art better understand the technical solutions in the present application, the technical solutions in the embodiments of the present application will be described clearly and completely below with reference to the accompanying drawings in the embodiments of the present application.

FIG. 1 is a flowchart of an example method for activating a business by voice in communication software. The method can be applied to instant messaging for activating a business, e.g., a payment business, by voice, and the payment business may specifically be a business of transferring to or paying another user or the like.

Specifically, the method shown in FIG 1 may include the following steps :
Step 101: When a user communicates with another person by using communication software, voice information input by the user is collected.
Step 102: The voice information is recognized, and a corresponding business is activated if the voice information includes a specific command.
Step 103: Business information and information including transaction data are sent to a business processing apparatus, such that the business processing apparatus processes the business.

This example can be applied to an instant messaging system, and the system may include a user terminal, such as a mobile phone, a tablet computer, or a computer. The system may further include an instant messaging server. Each user can register, through his/her own terminal, with the instant messaging server for an account, and can implement instant messaging between users. The instant messaging system may be QQ, Wechat, Laiwang, and the like. The communication software may specifically be QQ software, a Wechat application, a Laiwang application, and the like.

In this example, steps 102 to 103 may specifically be executed by a user terminal, which may activate a corresponding business by collecting user voice information of a user in instant messaging; and may send the business to the business processing apparatus for processing. The business processing apparatus here may specifically be an instant messaging server. Alternatively, it may also refer to that the user terminal sends the business to a separate business processing apparatus through an instant messaging server.

As an embodiment of the present patent, the method further includes verifying whether the user is a legitimate user. It is verified whether a user currently inputting voice information is a legitimate user.

As an embodiment of the present application, the verifying whether the user is a legitimate user specifically includes determining whether the user is a legitimate user by verifying a biometric feature of the user.

As an embodiment of the present application, the biometric feature includes a voiceprint of the user.

As an embodiment of the present application, the determining whether the user is a legitimate user by verifying voice of the user includes verifying whether the user is a legitimate user by voiceprint recognition.

As an embodiment of the present application, the recognizing the voice information further includes recognizing transaction data included in the voice information.

As an embodiment of the present application, the sending business information and information including transaction data to a business processing apparatus further includes sending the business information and the transaction data to the business processing apparatus.

As an embodiment of the present application, the sending business information and information including transaction data to a business processing apparatus further includes sending the business information and the voice information to the business processing apparatus.

As an embodiment of the present application, after receiving the business information and the information including transaction data, the business apparatus may further generate order information, such as a business order, and return it to the user terminal. The business order may include the business information and transaction data that is recognized by the business processing apparatus according to the voice information.

As an embodiment of the present application, the business information includes at least a
business ID, and identifiers of users of various parties that are communicating via the
communication software.

By means of the method in the above embodiments of the present application, by adding a solution of activating a business by voice in communication software on a user terminal, a
financial transaction business can be initiated during chatting of the user. The user can use the financial transaction business without exiting from a chat interface to perform complex click operations, thus greatly simplifying the operation complexity of the user, such that the user can have better user experience. Moreover, according to voiceprint recognition on voice information initiating the financial transaction business, it can be ensured that a user initiating the financial transaction business is a legitimate user, thus avoiding an insecurity factor that another person initiates a financial transaction business by using an intelligent terminal. Meanwhile, the same piece of voice information is used for verification (which is both a transaction instruction and voiceprint verification content), such that the user can use the method of the present application more conveniently.

FIG. 2 is a flowchart of an example method for activating a business by voice in communication software.

Step 201 : Business information and information including transaction data that are sent by a user terminal are received.

Step 202: A business is processed based on the business information and the information including transaction data.

As an embodiment of the present application, the information including transaction data is voice information, and the method further includes recognizing the transaction data in the voice information.

As an embodiment of the present application, the receiving business information and information including transaction data that are sent by a user terminal further includes verifying whether the user currently sending the business information and the information including transaction data is a legitimate user.

As an embodiment of the present application, whether the user is a legitimate user is determined by conducting voiceprint recognition on the voice information sent by the user terminal.

As an embodiment of the present application, the business information includes at least a
business ID, and identifiers of users of various parties that are communicating via the
communication software. After receiving the business information and the information including
transaction data, the business apparatus processes the business to form order information, e.g., a business order, and returns it to multiple user terminals involved in the business. The business may include a payment business, which may specifically be a business of transferring to or paying another user, or the like.

By means of the method in the above embodiments of the present application, by receiving the business information activated by the voice function on the user terminal, a response may be made to a financial transaction business in the process of providing a chatting service for the user. The user can use the financial transaction business without exiting from a chat interface to perform complex click operations, thus greatly simplifying the operation complexity of the user, such that the user can have better user experience. Moreover, according to voiceprint recognition on voice information initiating the financial transaction business, it can be ensured that a user initiating the financial transaction business is a legitimate user, thus avoiding an insecurity factor that another person initiates a financial transaction business by using an intelligent terminal. Meanwhile, the same piece of voice information is used for verification (which is both a transaction instruction and voiceprint verification content), such that the user can use the method of the present application more conveniently.

FIG. 3 is a schematic structural diagram of an apparatus for activating a business by voice in communication software according to the present application.

The apparatus includes a collection unit 301 configured to collect, when a user communicates with another person by using communication software, voice information input by the user;
a command recognition unit 302 configured to recognize the voice information, and activate a corresponding business if the voice information includes a specific command; and
a sending unit 303 configured to send business information and information including transaction data to a business processing apparatus, such that the business apparatus processes the business.

As an embodiment of the present application, the apparatus further includes a receiving unit 304 configured to receive a business order sent by the business processing apparatus.

As an embodiment of the present application, the apparatus further includes a verification unit 305 configured to verify whether the user is a legitimate user. Reference may be made to the corresponding method in the embodiment shown in FIG 1 for the specific step of the verification unit verifying whether the user is a legitimate user, which is not repeated herein.

As an embodiment of the present application, the verification unit 305 verifies whether the user is a legitimate user by voiceprint recognition.

The receiving unit and the sending unit in this embodiment may send and receive data by using a Wifi module, a GPRS or a 3Ci 4G network of a mobile phone (or an intelligent terminal such as a tablet computer). The collection unit may be a microphone of the mobile phone (or an intelligent terminal such as a tablet computer). The command recognition unit may use a voice recognition module in the prior art to recognize a specific command by recognizing specific words in the voice. The verification unit verifies legitimacy of the user through verifying voice input information by using a microphone and a voiceprint recognition module.

By means of the apparatus in the above embodiments of the present application, by adding a solution of activating a business by voice in communication software on a user terminal, a
financial transaction business can be initiated during chatting of the user. The user can use the financial transaction business without exiting from a chat interface to perform complex click operations, thus greatly simplifying the operation complexity of the user, such that the user can have better user experience. Moreover, according to voiceprint recognition on voice information initiating the financial transaction business, it can be ensured that a user initiating the financial transaction business is a legitimate user, thus avoiding an insecurity factor that another person initiates a financial transaction business by using an intelligent terminal. Meanwhile, the same piece of voice information is used for verification (which is both a transaction instruction and voiceprint verification content), such that the user can use the method of the present application more conveniently.

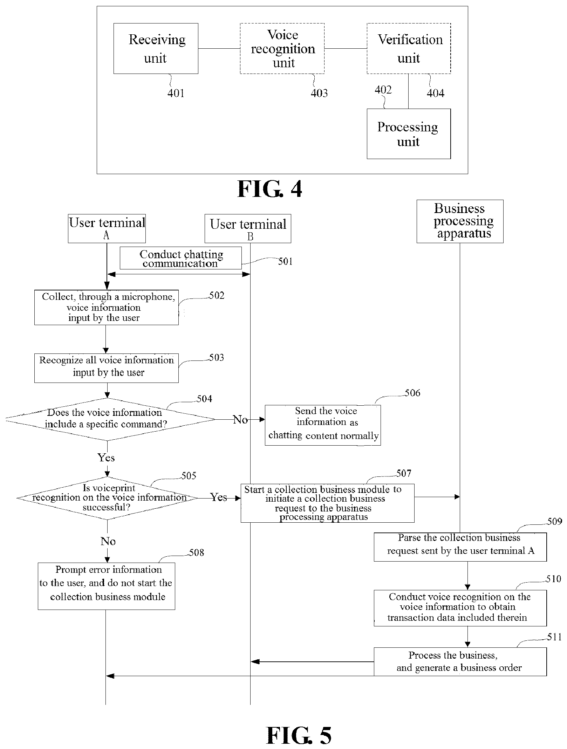

FIG 4 is a schematic structural diagram of a business processing apparatus according to an embodiment of the present application.

The apparatus includes a receiving unit 401 configured to receive business information and information including transaction data that are sent by a user terminal; and
a processing unit 402 configured to process a business based on the business information and the information including transaction data.

As an embodiment of the present application, the apparatus further includes a voice recognition unit 403 configured to recognize, when the information including transaction data is voice information, the transaction data in the voice information.

As an embodiment of the present application, the apparatus further includes a verification unit 404 configured to verify whether the user currently sending the business information and the information including transaction data is a legitimate user.

As an embodiment of the present application, the verification unit 404 is a voiceprint recognition unit configured to determine whether the user is a legitimate user by conducting voiceprint recognition on the voice information sent by the user terminal.

In this embodiment, the receiving unit may be a communication unit of a computer, for example, including an Ethernet connection device, and so on. An order generation unit may be implemented by using a device such as a CPU of the computer, a particularly set DSP, or a single chip microcomputer. The voice recognition unit may be implemented by using a voice recognition module, and the voice recognition module may use a voice recognition algorithm in the prior art, which is not repeated herein. The verification unit may compare a received character string with pre-stored verification information to achieve the objective of verification. For example, the verification unit compares the received character string verification information sent by the user terminal with the pre-stored verification information, or compares the received biometric feature with the pre-stored verification information to achieve the objective of verification. For example, the verification unit compares received fingerprint information sent by the user terminal with pre-stored fingerprint verification information, compares received voice information sent by the user terminal with pre-stored voiceprint verification information.

By means of the apparatus in the above embodiments of the present application, by receiving the business information activated by the voice function on the user terminal, a response may be made to a financial transaction business in the process of providing a chatting service for the user. The user can use the financial transaction business without exiting from a
chat interface to perform complex click operations, thus greatly simplifying the operation complexity of the user, such that the user can have better user experience. Moreover, according to voiceprint recognition on voice information initiating the financial transaction business, it can be ensured that a user initiating the financial transaction business is a legitimate user, thus avoiding an insecurity factor that another person initiates a financial transaction business by using an intelligent terminal. Meanwhile, the same piece of voice information is used for verification (which is both a transaction instruction and voiceprint verification content), such that the user can use the method of the present application more conveniently.

FIG. 5 is a data flow diagram of activating a business by voice in communication software according to an embodiment of the present application. This embodiment is illustrated by taking a specific application scenario as an example. This embodiment includes a user terminal A and a user terminal B that are chatting via communication software, as well as a business processing apparatus configured to correspondingly process the business initiated by the user terminal. The user terminal A and the user terminal B may include mobile phones, tablet computers, computers, and the like. The communication software may be QQ software, a Wechat application, a Laiwang application, and the like. Definitely, in another embodiment, there may be more user terminals in a chatting communication state.

Step 501: The user terminal A conducts chatting communication with the user terminal B. The communication may include text-type chatting, or include voice-type communication. Here, the voice-type communication refers to a chatting communication manner in which users inputs voice short messages and sends them in chat software.

Step 502: The user terminal A collects, through a microphone, voice information input by the user.

The voice information collected in this step may include chatting content and a specific instruction. For example, the user terminal A inputs voice information "Hello" by using a microphone of a mobile phone, and sends it to the user terminal B; the user terminal B replies with voice information "Hello"; and then the user terminal A inputs "Omnipotent Alipay collection, I want to charge 100 Yuan from you" through the microphone. The voice information includes a specific command "Omnipotent Alipay collection" and transaction data "I want to charge 100 Yuan from you".

Step 503: A command recognition unit of the user terminal A recognizes all voice information input by the user.

A voice recognition module in the user terminal A may be used for voice recognition, which is not repeated herein.

Step 504: It is determined whether the recognized voice information includes a specific command, and step 505 is performed if a specific command is included; otherwise, step 506 is performed.

In this example, the user terminal A recognizes that the voice information "Hello" input by the user does not include a specific command, and therefore, step 506 is performed to send the voice information as chatting content normally. "Omnipotent Alipay collection, I want to charge 100 Yuan from you" input by the user includes the specific command "Omnipotent Alipay collection". Definitely, in another embodiment, the specific command may be different, as long as it is different from common chatting voice information.

Step 505: Voiceprint recognition is conducted on the input voice information, and step 507 is performed if the voiceprint recognition is successful; otherwise, step 508 is performed.

In this step, the user performs training of voiceprint recognition in the mobile phone in advance to obtain a relatively accurate voiceprint model. The voiceprint model may be a Hidden Markov Model (HMM), a Gaussian Mixed Model (GMM), a Support Vector Machine (SVM), or the like. Then, the voiceprint recognition is conducted on the current voice information. For example, "Omnipotent Alipay collection" is matched with the voiceprint model to confirm whether the user currently initiating a business is a legitimate user. In this way, the possibility of economic loss caused by a financial transaction to a friend initiated when the mobile phone is used by another person in the prior art may be avoided. On the other hand, the voiceprint recognition is conducted on the local mobile phone, to avoid the problem of personal information leakage of the user when the voiceprint information of the user is uploaded to the server and the server is attacked to cause information leakage.

As another embodiment, the voiceprint recognition of this step (or other verification manners) may also be conducted in the business processing apparatus. In this case, a voiceprint sample database (or corresponding data required in other verification manners) may be preset on the business processing apparatus. When a business request is sent, the voice information or data required by other verifications is sent to the business processing apparatus for verification of the user at a remote end.

It can be seen from the above embodiment that, recognition by using a voiceprint is a preferred embodiment, as user legitimacy verification can be performed while the user inputs the voice information (that is, including the specific command and the transaction data), and the user does not need to input more verification information again, such that the user can more conveniently and quickly activate a corresponding business, thereby improving the user experience.

In the process that the voice recognition is conducted on the voice information input by the user to determine whether a specific command is included, voiceprint recognition is conducted to verify the legitimacy of the user.

Step 506: The voice information as chatting content is sent normally.

Step 507: A collection business module is started to initiate a collection business request to the business processing apparatus.

In this step, the collection business request includes business information and voice information. The business information includes a business ID (representing a collection business) and user identifiers (user unique identifiers of the user terminal A and the user terminal B or unique identifiers of SIM cards, or the like) of different parties in the chatting communication. The voice information includes "Omnipotent Alipay collection, I want to charge 100 Yuan from you", and the voice information includes transaction data "I want to charge 100 Yuan from you".

Step 508: Error information is prompted to the user, and the collection business module is not started.

Step 509: The business processing apparatus parses the collection business request sent by the user terminal A.

The business to be processed currently (obtained according to the business ID), users involved in the business (obtained through the user identifiers), and the voice information are obtained from the business information.

Step 510: Voice recognition is conducted on the voice information to obtain the transaction data included therein.

In this step, the recognition may be conducted on the voice information by using a voice recognition unit to obtain the transaction data included therein. The business processing apparatus constructed by using a high-performance computer can provide a relatively accurate voice recognition result; in other words, it can obtain accurate transaction data in the voice information.

In this example, the recognized transaction data is "I want to charge 100 Yuan from you". Through semantic analysis and the user identifiers of the current communication, it is determined that the payee is the user terminal A, the payer is the user terminal B, and the transaction amount is 100 Yuan.

Step 511: The business is processed, and a business order is generated and sent to the user terminal A and the user terminal B that are related to the business.

The corresponding business is processed according to the business ID and the users involved in the business and according to the transaction data, and the business order is generated and sent to both parties of this collection business. The business order sent to the user terminal A is a notification, and the business order sent to the user terminal B is a request for payment. The user terminal B may perform a payment operation according to a business process in the prior art.

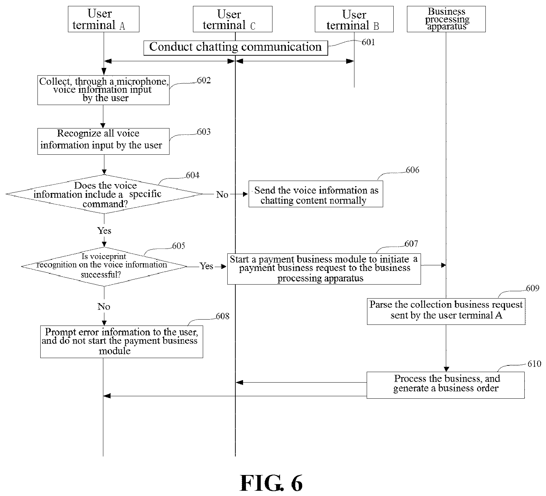

FIG. 6 is another data flow diagram of activating a business by voice in communication software according to an embodiment of the present application.

This embodiment includes a user terminal A, a user terminal B, and a user terminal C that are chatting by using communication software, as well as a business processing apparatus configured to correspondingly process a business initiated by the user terminals.

Step 601 is included, in which the user terminal A, the user terminal B and the user terminal C conduct chatting communication.

Step 602: The user terminal A collects, through a microphone, voice information input by the user.

In this embodiment, contents identical to those in the embodiment shown in FIG. 5 are not repeated, and voice information including a specific instruction in this step is "Omnipotent

Alipay payment, I want to pay 100 Yuan to the user terminal C".

Step 603: A command recognition unit of the user terminal A recognizes all voice information input by the user.

In this step, the voice information "Omnipotent Alipay payment, I want to pay 100 Yuan to the user terminal C" is recognized completely. In other words, not only is the specific instruction "Omnipotent Alipay payment" recognized, but also transaction data "I want to pay 100 Yuan to the user terminal C" is recognized. Through semantic analysis and user identifiers of the current communication, the obtained transaction data is: the payer is the user terminal A, the payee is the user terminal C, and the transaction amount is 100 Yuan.

Step 604: It is determined whether the recognized voice information includes a specific command, and step 605 is performed if a specific command is included; otherwise, step 606 is performed.

Step 605: Voiceprint recognition is conducted on the input voice information, and step 607 is performed if the voiceprint recognition is successful; otherwise, step 608 is performed.

In this step, verification of user legitimacy is implemented by voiceprint recognition.

Moreover, the verification of user legitimacy in this step may also be conducted in the business processing apparatus. In this case, necessary data for the verification of user legitimacy needs to be sent to the business processing apparatus.

Step 607: A payment business module is started to initiate a payment business request to the business processing apparatus.

In this step, the payment business request includes business information and transaction data. The business information includes a business ID (representing a collection business) and user identifiers (the user terminal A, the user terminal B, and the user terminal C) of different parties in the chatting communication. The transaction data is that: the payer is the user terminal A, the payee is the user terminal C, and the transaction amount is 100 Yuan.

Step 608: Error information is prompted to the user, and the payment business module is not started.

Step 609: The business processing apparatus parses the collection business request sent by the user terminal A.

The business to be currently processed (obtained according to the business ID) is obtained from the business information, and it is obtained from the transaction data that the payer is the user terminal A, the payee is the user terminal C, and the transaction amount is 100 Yuan. The parsing in this step does not require voice recognition, as voice recognition has been conducted in the user terminal A, and the payment business request sent by the user terminal A includes business information and transaction data that are in the fom of characters.

Step 610: The business processing apparatus processes the business, generates a business order, and sends the business order to the user terminal A and the user terminal C that are related to the business.

The business order is generated according to the business ID and the users involved in the business and according to the transaction data. The business order is sent to both parties of this payment business. The business order sent to the user terminal A is a payment request, and the user terminal A may perform a payment operation according to a business process in the prior art.
The business order sent to the user terminal C is a collection notification.

By means of the method and apparatus in the above embodiments of the present application, by activation by the voice function on the user terminal, a response may be made to a financial transaction business in the process of providing a chatting scrvicc for the user. The user can use the financial transaction business without exiting from a chat interface to perform complex click operations, thus greatly simplifying the operation complexity of the user, such that the user can have better user experience. Moreover, according to voiceprint recognition on voice information initiating the financial transaction business, it can be ensured that a user initiating the financial transaction business is a legitimate user, thus avoiding an insecurity factor that another person initiates a financial transaction business by using an intelligent terminal. Meanwhile, the same piece of voice information is used for verification (which is both a transaction instruction and voiceprint verification content), such that the user can use the method of the present application more conveniently.

An improvement on a technology may be obviously distinguished as an improvement on hardware (for example, an improvement on a circuit structure such as a diode, a transistor, and a switch) or an improvement on software (an improvement on a method procedure). However, with the development of technologies, improvements of many method procedures at present may be considered as direct improvements on hardware circuit structures. Almost all designers program the improved method procedures into hardware circuits to obtain corresponding hardware circuit structures. Therefore, it cannot be assumed that the improvement of a method procedure cannot be implemented by using a hardware entity module. For example, a Programmable Logic Device (PLD) (for example, a Field Programmable Gate Array (FPGA)) is such an integrated circuit, and logic functions thereof are determined by a user programming devices. Designers program by themselves to "integrate" a digital system into a piece of PID, without asking a chip manufacturer to design and manufacture a dedicated integrated circuit chip 2. Moreover, at present, the programming is mostly implemented by using "logic compiler" software, instead of manually manufacturing an integrated circuit chip. The software is similar to a software complier used for developing and writing a program, and original code before compiling also needs to be written in a specific programming language, which is referred to as a Hardware Description Language (HDL). There are many types of HDLs, such as ABEL (Advanced Boolean Expression
Language), AHDL (Altera Hardware Description Language), Confluence, CUPL (Cornell University Programming Language), HDCal, JHDL (Java Hardware Description Language), Lava, Lola, MyHDL, PALASM, and RHDL (Ruby Hardware Description Language), among which VHDL (Very-High-Speed Integrated Circuit Hardware Description Language) and Verilog2 are most commonly used now. Persons skilled in the art also should know that a hardware circuit for implementing the logic method procedure may be easily obtained simply by logically programming the method procedure using the above several hardware description languages and programming it into an integrated circuit.

A controller may be implemented in any suitable manner. For example, the controller may be in the form of, for example, a microprocessor or a processor and a computer readable medium storing computer readable program codes (for example, software or firmware) executable by the (micro)processor, a logic gate, a switch, an Application Specific Integrated Circuit (ASIC), a programmable logic controller, and an embedded micro-controller. Examples of the controller include, but are not limited to, the following micro-controllers: ARC 6251), Atmel AT91 SAM, Microchip PIC18F26K20, and Silicone Labs C8051F320. A memory controller may also be implemented as a part of control logic of a memory.

Those skilled in the art also know that, in addition to implementing the controller by using pure computer readable program codes, the method steps may be logically programmed to enable the controller to implement the same function in the form of a logic gate, a switch, an application specific integrated circuit, a programmable logic controller and an embedded microcontroller.
Therefore, such a controller may be considered as a hardware component, and apparatuses included therein and configured to implement various functions may also be considered as structures inside the hardware component. Alternatively, the apparatuses configured to implement various functions may further be considered as both software modules for implementing the method and structures inside the hardware component.

The system, apparatus, module or unit illustrated in the above embodiments may specifically be implemented by using a computer chip or an entity, or a product having a certain function.

For ease of description, when the apparatus is described, it is divided into various units in terms of functions for respective descriptions. Definitely, when the present application is implemented, the functions of the units may be implemented in the same or multiple software and/or hardware.

Based on the foregoing descriptions of the implementation manners, those skilled in the art may clearly understand that the present application may be implemented by software plus a necessary universal hardware platform. Based on such understanding, the technical solution of the present application essentially, or the portion contributing to the prior art may be embodied in the form of a software product. The software product may be stored in a storage medium, such as a ROM/RAM, a magnetic disk, or an optical disc, and include several instructions that enable a computer device (which may be a personal computer, a server, a network device, or the like) to execute the method in the embodiments or certain portions of the embodiments of the present application.

The embodiments in the specification are described progressively, identical or similar parts of the embodiments may be obtained with reference to each other, and each embodiment emphasizes a part different from other embodiments. Especially, the system embodiment is basically similar to the method embodiment, so it is described simply. For related parts, refer to the descriptions of the parts in the method embodiment.

The present application is applicable to various universal or dedicated computer system environments or configurations, such as, a personal computer, a server computer, a handheld device or a portable device, a tablet device, a multi-processor system, a microprocessor-based system, a set top box, a programmable consumer electronic device, a network PC, a minicomputer, a mainframe computer, and a distributed computing environment including any of the above systems or devices.

The present application may be described in a common context of a computer executable instruction executed by a computer, for example, a program module. Generally, the program module includes a routine, a program, an object, a component, a data structure, and the like for executing a specific task or implementing a specific abstract data type. The present application may also be practiced in a distributed computing environment, and in the distributed computer environment, a task is executed by using remote processing devices connected through a communications network. In the distributed computer environment, the program module may be located in a local and remote computer storage medium including a storage device.

## Claims

1. A method for activating a financial transaction business by voice through a communication software on a first user terminal (A) during ongoing instant messaging of a first user at the first user terminal with a second user at a second user terminal (B, C), the method comprising:
collecting (502, 602), by the first user terminal, when the first user communicates with the second user through an instant messaging interface of a communication software, voice information provided as input for instant messaging from the first user to the second user;
recognizing (504, 604), by the first user terminal, whether the voice information includes a specific command;
verifying (505, 605), by the first user terminal, whether the first user is a legitimate user, wherein verifying whether the user is a legitimate user comprises applying voiceprint recognition on the input voice information; and
in response to verifying that the first user is a legitimate user:
based on recognizing that the voice information includes the specific command, activating, by the first user terminal, an execution of a corresponding financial transaction business at a business processing apparatus without exiting from the instant messaging interface, the business processing apparatus comprising an instant messaging server configured to receive instant messaging, and
sending (507, 607), by the first user terminal, business information and the voice information to the business processing apparatus, such that the business processing apparatus processes (511, 610) the financial transaction business according to the business information and transaction data comprised in the voice information.

2. The method of claim 1, further comprising, in response to verifying (505, 605) that the first user is not a legitimate user, prompting (508, 608) error information to the first user.

3. The method of claim 1, wherein when the voice information is recognized, the transaction data comprised in the voice information is further recognized.

4. The method of claim 1, further comprising:
registering, by the first user terminal (A), the first user at the instant messaging server for an account to implement instant messaging between the business processing apparatus and the first user.

5. The method of claim 1, wherein the business information comprises at least a business ID and identifiers of the first and second users communicating via the communication software.

6. The method of claim 1, wherein after sending the business information and the voice information comprising the transaction data to the business processing apparatus, the method further comprises:
receiving, by the first user terminal (A) a business order sent by the business processing apparatus.

7. The method of claim 1, further comprising:
receiving, by the business processing apparatus, the business information and the voice information comprising the transaction data that are sent by the first user terminal (A); and
processing, by the business processing apparatus, the financial transaction business based on the business information and the information comprising transaction data.

8. The method of claim 7, further comprising:
recognizing, by the business processing apparatus, the transaction data in the voice information by using voice recognition.

9. The method of claim 7, wherein receiving the business information and the voice information comprising the transaction data that are sent by the first user terminal (A) further comprises verifying, by the business processing apparatus, whether the first user currently sending the business information and the voice information comprising the transaction data is a legitimate user.

10. The method according to claim 9, wherein verifying whether the first user is a legitimate user is determined by conducting a voiceprint recognition on the voice information sent by the first user terminal (A).

11. An apparatus for activating a financial transaction business by voice through a communication software, the apparatus comprising multiple units (301, 302, 303, 304, 305) implemented as software and/or hardware units, wherein the apparatus is configured to perform the method of any one of claims 1 to 6.

12. An instant messaging system comprising a terminal and an instant messaging server, wherein the system is configured to perform the method of any one of claims 1 to 10.

## Patentansprüche

1. Verfahren zum Aktivieren eines Finanztransaktionsgeschäfts mittels Sprache über eine Kommunikationssoftware an einem ersten Benutzerendgerät (A) während des laufenden Instant Messaging eines ersten Benutzers am ersten Benutzerendgerät mit einem zweiten Benutzer an einem zweiten Benutzerendgerät (B, C), wobei das Verfahren Folgendes umfasst:
Sammeln (502, 602) von Sprachinformationen, die als Eingabe für Instant Messaging dem zweiten Benutzer vom ersten Benutzer bereitgestellt werden, durch das erste Benutzerendgerät, wenn der erste Benutzer über eine Instant-Messaging-Schnittstelle einer Kommunikationssoftware mit dem zweiten Benutzer kommuniziert;
Erkennen (504, 604) durch das erste Benutzerendgerät, ob die Sprachinformationen einen speziellen Befehl beinhalten;
Verifizieren (505, 605) durch das erste Benutzerendgerät, ob der erste Benutzer ein legitimer Benutzer ist, wobei das Verifizieren, ob der Benutzer ein legitimer Benutzer ist, das Anwenden einer Sprachabdruckerkennung an den eingegebenen Sprachinformationen umfasst; und
in Reaktion auf das Verifizieren, dass der erste Benutzer ein legitimer Benutzer ist:
Aktivieren einer Ausführung eines entsprechenden Finanztransaktionsgeschäfts an einer Geschäftsverarbeitungsvorrichtung ohne die Instant-Messaging-Schnittstelle zu verlassen, durch das erste Benutzerendgerät auf Basis des Erkennens, dass die Sprachinformationen den speziellen Befehl beinhalten, wobei die Geschäftsverarbeitungsvorrichtung einen Instant-Messaging-Server umfasst, der dazu ausgelegt ist, Instant Messaging zu empfangen, und
Senden (507, 607) von Geschäftsinformationen und der Sprachinformationen durch das erste Benutzerendgerät an die Geschäftsverarbeitungsvorrichtung, derart, dass die Geschäftsverarbeitungsvorrichtung das Finanztransaktionsgeschäft gemäß den Geschäftsinformationen und Transaktionsdaten, die in den Sprachinformationen umfasst sind, verarbeitet (511, 610).

2. Verfahren nach Anspruch 1, das in Reaktion auf das Verifizieren (505, 605), dass der erste Benutzer kein legitimer Benutzer ist, ferner das Ausgeben (508, 608) von Fehlerinformationen an den ersten Benutzer umfasst.

3. Verfahren nach Anspruch 1, wobei, wenn die Sprachinformationen erkannt werden, die Transaktionsdaten, die in den Sprachinformationen umfasst sind, weiter erkannt werden.

4. Verfahren nach Anspruch 1, das ferner Folgendes umfasst:
Registrieren des ersten Benutzers am Instant-Messaging-Server für ein Konto durch das erste Benutzerendgerät (A), um Instant Messaging zwischen der Geschäftsverarbeitungsvorrichtung und dem ersten Benutzer zu implementieren.

5. Verfahren nach Anspruch 1, wobei die Geschäftsinformationen mindestens eine Geschäfts-ID und Kennungen des ersten und des zweiten Benutzers, die via die Kommunikationssoftware kommunizieren, umfassen.

6. Verfahren nach Anspruch 1, wobei das Verfahren nach dem Senden der Geschäftsinformationen und der Sprachinformationen, die die Transaktionsdaten umfassen, an die Geschäftsverarbeitungsvorrichtung ferner Folgendes umfasst:
Empfangen eines Geschäftsauftrags, der von der Geschäftsverarbeitungsvorrichtung gesendet wird, durch das erste Benutzerendgerät (A).

7. Verfahren nach Anspruch 1, das ferner Folgendes umfasst:
Empfangen der Geschäftsinformationen und der Sprachinformationen, die die Transaktionsdaten umfassen, die vom ersten Benutzerendgerät (A) gesendet werden, durch die Geschäftsverarbeitungsvorrichtung und
Verarbeiten des Finanztransaktionsgeschäfts durch die Geschäftsverarbeitungsvorrichtung auf Basis der Geschäftsinformationen und der Informationen, die die Transaktionsdaten umfassen.

8. Verfahren nach Anspruch 7, das ferner Folgendes umfasst:
Erkennen der Transaktionsdaten in den Sprachinformationen durch die Geschäftsverarbeitungsvorrichtung unter Verwendung einer Spracherkennung.

9. Verfahren nach Anspruch 7, wobei das Empfangen der Geschäftsinformationen und der Sprachinformationen, die die Transaktionsdaten umfassen, die vom ersten Benutzerendgerät (A) gesendet werden, femer das Verifizieren durch die Geschäftsverarbeitungsvorrichtung, ob der erste Benutzer, der derzeit die Geschäftsinformationen und die Sprachinformationen, die die Transaktionsdaten umfassen, sendet, ein legitimer Benutzer ist, umfasst.

10. Verfahren nach Anspruch 9, wobei das Verifizieren, ob der erste Benutzer ein legitimer Benutzer ist, durch Durchführen einer Sprachabdruckerkennung an den Sprachinformationen, die vom ersten Benutzerendgerät (A) gesendet werden, bestimmt wird.

11. Vorrichtung zum Aktivieren eines Finanztransaktionsgeschäfts mittels Sprache über eine Kommunikationssoftware, wobei die Vorrichtung mehrere Einheiten (301, 302, 303, 304, 305) umfasst, die als Software- und/oder Hardwareeinheiten implementiert sind, wobei die Vorrichtung dazu ausgelegt ist, das Verfahren nach einem der Ansprüche 1 bis 6 umzusetzen.

12. Instant-Messaging-System, das ein Endgerät und einen Instant-Messaging-Server umfasst, wobei das System dazu ausgelegt ist, das Verfahren nach einem der Ansprüche 1 bis 10 umzusetzen.

## Revendications

1. Procédé d'activation d'un commerce de transaction financière par la voix par le biais d'un logiciel de communication sur un premier terminal d'utilisateur (A) durant une messagerie instantanée en cours d'un premier utilisateur au niveau du premier terminal d'utilisateur avec un second utilisateur au niveau d'un second terminal d'utilisateur (B, C), le procédé comprenant :
la collecte (502, 602), par le premier terminal d'utilisateur, quand le premier utilisateur communique avec le second utilisateur par le biais d'une interface de messagerie instantanée d'un logiciel de communication, d'informations vocales fournies en tant qu'entrée de messagerie instantanée par le premier utilisateur au second utilisateur ;
la reconnaissance (504, 604), par le premier terminal d'utilisateur, que les informations vocales comportent ou non une commande spécifique ;
la vérification (505, 605), par le premier terminal d'utilisateur, que le premier utilisateur est un utilisateur légitime ou non, la vérification que l'utilisateur est un utilisateur légitime ou non comprenant l'application d'une reconnaissance d'empreinte vocale sur les informations vocales d'entrée ; et
en réponse à la vérification que le premier utilisateur est un utilisateur légitime :
lorsqu'il est reconnu que les informations vocales comportent la commande spécifique, l'activation, par le premier terminal d'utilisateur, d'une exécution d'un commerce de transaction financière correspondant au niveau d'un appareil de traitement de commerce sans sortir de l'interface de messagerie instantanée, l'appareil de traitement de commerce comprenant un serveur de messagerie instantanée configuré pour recevoir une messagerie instantanée, et
l'envoi (507, 607), par le premier terminal d'utilisateur, d'informations de commerce et des informations vocales à l'appareil de traitement de commerce, de telle sorte que l'appareil de traitement de commerce traite (511, 610) la transaction financière conformément aux informations de commerce et à des données de transaction comprises dans les informations vocales.

2. Procédé selon la revendication 1, comprenant en outre, en réponse à la vérification (505, 605) que le premier utilisateur n'est pas un utilisateur légitime, l'envoi (508, 608) d'informations d'erreur au premier utilisateur.

3. Procédé selon la revendication 1, dans lequel quand les informations vocales sont reconnues, les données de transaction comprises dans les informations vocales sont également reconnues.

4. Procédé selon la revendication 1, comprenant en outre :
l'enregistrement, par le premier terminal d'utilisateur (A), du premier utilisateur au niveau du serveur de messagerie instantanée avec un compte pour mettre en œuvre une messagerie instantanée entre l'appareil de traitement de commerce et le premier utilisateur.

5. Procédé selon la revendication 1, dans lequel les informations de commerce comprennent au moins un identifiant de commerce et des identifiants des premier et second utilisateurs communiquant par l'intermédiaire du logiciel de communication.

6. Procédé selon la revendication 1, le procédé comprenant en outre, après l'envoi des informations de commerce et des informations vocales comprenant les données de transaction à l'appareil de traitement de commerce :
la réception, par le premier terminal d'utilisateur (A) d'un ordre de commerce envoyé par l'appareil de traitement de commerce.

7. Procédé selon la revendication 1, comprenant en outre :
la réception, par l'appareil de traitement de commerce, des informations de commerce et des informations vocales comprenant les données de transaction qui sont envoyées par le premier terminal d'utilisateur (A) ; et
le traitement, par l'appareil de traitement de commerce, du commerce de transaction financière en fonction des informations de commerce et des informations comprenant des données de transaction.

8. Procédé selon la revendication 7, comprenant en outre :
la reconnaissance, par l'appareil de traitement de commerce, des données de transaction dans les informations vocales par reconnaissance vocale.

9. Procédé selon la revendication 7, dans lequel la réception des informations de commerce et des informations vocales comprenant les données de transaction qui sont envoyées par le premier terminal d'utilisateur (A) comprend en outre la vérification, par l'appareil de traitement de commerce, que le premier utilisateur qui envoie présentement les données de commerce et les informations vocales comprenant les données de transaction est un utilisateur légitime ou non.

10. Procédé selon la revendication 9, dans lequel la vérification que le premier utilisateur est un utilisateur légitime ou non est déterminée en effectuant une reconnaissance d'empreinte vocale sur les informations vocales envoyées par le premier terminal d'utilisateur (A).

11. Appareil d'activation d'un commerce de transaction financière par la voix par le biais d'un logiciel de communication, l'appareil comprenant de multiples unités (301, 302, 303, 304, 305) mises en œuvre sous forme logicielle et/ou unités matérielles, l'appareil étant configuré pour réaliser le procédé selon l'une quelconque des revendications 1 à 6.

12. Système de messagerie instantanée comprenant un terminal et un serveur de messagerie instantanée, le système étant configuré pour réaliser le procédé selon l'une quelconque des revendications 1 à 10.
